(19) Europäisches Patentamt / European Patent Office / Office européen des brevets

(11) **EP 3 400 325 B1**

(12) **EUROPÄISCHE PATENTSCHRIFT**

(45) Veröffentlichungstag und Bekanntmachung des Hinweises auf die Patenterteilung:
**26.01.2022 Patentblatt 2022/04**

(21) Anmeldenummer: **17702757.0**

(22) Anmeldetag: **03.01.2017**

(51) Internationale Patentklassifikation (IPC):
**D01G 23/06** (2006.01)  **D01G 31/00** (2006.01)
**G01B 11/14** (2006.01)  **G01N 21/89** (2006.01)

(52) Gemeinsame Patentklassifikation (CPC):
**D01G 31/006; D01G 23/06;** D01H 13/22;
G01N 2021/8444; G01N 2021/845

(86) Internationale Anmeldenummer:
**PCT/CH2017/000001**

(87) Internationale Veröffentlichungsnummer:
**WO 2017/117688 (13.07.2017 Gazette 2017/28)**

(54) **VERFAHREN UND ÜBERWACHUNGSEINHEIT ZUR ÜBERWACHUNG EINES FASERSTROMS**

PROCESS AND DETECTION UNIT TO MONITOR A FIBER FLOW

PROCEDE ET UNITE DE DETECTION POUR SURVEILLER UN FLUX DE FIBRES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.01.2016 CH 12016**

(43) Veröffentlichungstag der Anmeldung:
**14.11.2018 Patentblatt 2018/46**

(73) Patentinhaber:
• **Uster Technologies AG**
  **8610 Uster (CH)**
• **Maschinenfabrik Rieter AG**
  **8406 Winterthur (CH)**

(72) Erfinder:
• **BÜHLER, Beat**
  **8405 Winterthur (CH)**

• **STORZ, Rafael**
  **8280 Kreuzlingen (CH)**
• **SIEGENTHALER, Mario**
  **8535 Herdern (CH)**
• **SAARO, Dyrk**
  **9500 Wil SG (CH)**

(74) Vertreter: **Pliska, Pavel**
  **Uster Technologies AG**
  **Sonnenbergstrasse 10**
  **8610 Uster (CH)**

(56) Entgegenhaltungen:
**EP-A1- 1 103 640**  **WO-A1-91/19841**
**DE-A1-102005 023 992**  **JP-B2- 3 790 779**

**Beschreibung**

FACHGEBIET

Die vorliegende Erfindung bezieht sich auf ein Verfahren und eine Überwachungseinheit zur Überwachung eines Faserstroms, gemäss den Oberbegriffen der unabhängigen Patentansprüche. Ein weiterer Patentanspruch betrifft eine Vorrichtung zur Behandlung eines Faserstroms. Die Erfindung kann insbesondere, aber nicht ausschliesslich, in der Spinnereivorbereitung eingesetzt werden.

STAND DER TECHNIK

Die EP-0'877'104 A1 offenbart eine Vorrichtung zum Behandeln eines Fasergutstroms in einer Faseraufbereitungsanlage. Ein erstes Behandlungsmodul ist ausgangsseitig mit einer Auflösevorrichtung zum Auflösen des Fasergutstroms ausgerüstet. Ein zweites Behandlungsmodul ist als Vorrichtung zum Erkennen und Ausscheiden von Fremdmaterial aus dem Fasergutstrom ausgebildet und weist ein Sensorfeld und eine Ausscheidevorrichtung auf. Die beiden Behandlungsmodule stehen derart miteinander in Wirkverbindung, dass die ausgangsseitige Auflösevorrichtung des ersten Behandlungsmoduls eine eingangsseitige Einspeisevorrichtung des zweiten Behandlungsmoduls bildet.

Die WO-02/066717 A1 bezieht sich auf eine Vorrichtung zum Erkennen und Ausscheiden von Fremdstoffen aus einem Fasermaterial, das über Zuführelemente einer Reinigungsstufe zugeführt wird. Das Fasermaterial wird mittels einer Öffnerwalze über ein oder mehrere Abscheidemittel geführt und an einen nachfolgenden Förderkanal abgegeben. Eine Erkennungs- und Ausscheidevorrichtung für die Fremdstoffe ist unmittelbar im Abgabebereich der Reinigungsstufe angeordnet.

Die WO-91/19841 A1 beschreibt ein Verfahren und eine Vorrichtung zur Regelung eines Öffnungsvorganges, beispielsweise an einer Karde. Der Auflösegrad wird während des Öffnungsvorganges mittels eines Kämmsegmentes ermittelt, welches in die vom Tambour getragenen Fasern eingreift, wobei die auf das Kämmsegment wirkende Kraft als für den Auflösegrad repräsentatives Signal herangezogen wird. Ein dem Auflösegrad entsprechendes Ausgangssignal wird in eine Regelung eingespeist, welche eine Veränderung eines die Auflösung beeinflussenden Parameters vornimmt. Gemäss einer anderen Ausführungsform kann sich das Kämmsegment unterhalb der Reinigungswalze einer Reinigungsmaschine befinden.

Die EP-1'103'640 A1 offenbart eine Flockentransportvorrichtung mit einem Prüfgerät. Das Prüfgerät kann z. B. eine CCD-Kamera bzw. CCD-Zeilensensoren umfassen. Es misst den Vernissungsgrad, den Verschmutzungsgrad und/oder den Öffnungsgrad der Faserflocken, wobei mit dem Öffnungsgrad offenbar die momentane Flockengrösse gemeint ist.

Die JP-3'790'779 B2 befasst sich mit der Homogenität von Spinnkabeln. Ein Bild des Spinnkabels wird mit einer CCD-Kamera aufgenommen. Die Homogenität wird aufgrund des mittleren Hell-Dunkel-Verhältnisses entlang der Dickenrichtung des Spinnkabels berechnet.

In der DE-10'2005'023'992 A1 ist ein Streckwerk für Faserbänder beschrieben. Ein Einlaufmessorgan misst die Masse der Faserbänder am Streckwerkseinlauf, und ein Auslaufmessorgan misst die Masse des Faserverbandes am Streckwerksauslauf. Die Signale des Einlauf- und des Auslaufmessorgans werden einer Steuer- und Regeleinrichtung zugeführt. Die Steuer- und Regeleinrichtung regelt den Verzugsvorgang derart, dass Massenschwankungen der Faserbänder kompensiert bzw. eine Vergleichmässigung des Faserbandes erreicht wird.

DARSTELLUNG DER ERFINDUNG

Es ist eine Aufgabe der vorliegenden Erfindung, eine neue Art der Überwachung eines Faserstroms anzugeben.

Diese und andere Aufgaben werden durch das Verfahren und die Überwachungseinheit, wie sie in den unabhängigen Ansprüchen definiert sind, gelöst. Vorteilhafte Ausführungsformen sind in den abhängigen Patentansprüchen angegeben.

Das erfindungsgemässe Verfahren dient zur Überwachung eines Faserstroms aus einem Fasermaterial, insbesondere in der Spinnereivorbereitung. Ein Auflösegrad des Fasermaterials wird bestimmt, der angibt, wie gut das Fasermaterial in einzelne Faserflocken aufgelöst ist. Mindestens ein Bild des Fasermaterials wird aufgenommen, und aus dem mindestens einen Bild wird diejenige Bildfläche, auf die Fasermaterial abgebildet ist, durch Bildverarbeitung bestimmt. Ein Massenfluss des Faserstroms pro Zeiteinheit wird bestimmt. Der Auflösegrad wird als skalare Grösse durch Bildung eines Quotienten aus der Bildfläche, auf die Fasermaterial abgebildet ist, einerseits und aus dem Massenfluss andererseits berechnet.

Das Vorliegen des Auflösegrades in Form einer skalaren Grösse hat den Vorteil, dass damit der Auflösegrad direkt als Regelgrösse in einem untern beschriebenen Regelkreis und/oder als Steuersignal in einem unten beschriebenen Steuersystem verwendbar ist. Im genannten Quotienten kann die Bildfläche im Zähler und der Massenfluss im Nenner stehen oder umgekehrt. Ausser der genannten Quotientenbildung können bei der Berechnung des Auflösegrades weitere Rechenoperationen durchgeführt werden, in welche die Bildfläche, der Massenfluss und/oder weitere Grössen eingehen.

In einer Ausführungsform erfolgen die Aufnahme des mindestens einen Bildes und die Bestimmung des Massenflusses pro Zeiteinheit an unterschiedlichen Stellen des Faserstroms. Die Aufnahme des Bildes kann z. B. unmittelbar hinter einer Öffnungseinheit zum Öffnen des Faserstroms und die Bestimmung des Massenflusses pro Zeiteinheit an einer Karde, die stromabwärts von der Öffnungseinheit angeordnet ist, erfolgen. Das Bild und der Massenfluss pro Zeiteinheit werden durch geeignete Übertragungsmittel an eine Auswerteeinheit übertragen, welche zur Berechnung des Auflösegrades eingerichtet ist.

Der Auflösegrad kann gemäss der Formel

$$X = A_F \big/ \big( A_T \cdot m \big)$$

bestimmt werden, worin $A_F$ diejenige Bildfläche, auf die Fasermaterial abgebildet wird, $A_T$ eine Gesamtfläche des Bildes und m einen Massenfluss des Faserstroms pro Zeiteinheit bedeuten.

In einer Ausführungsform werden gleichzeitig mehrere Bilder des Fasermaterials aufgenommen.

Während oder nach der Bestimmung des Auflösegrades erfolgt vorzugsweise eine Tiefpassfilterung des Auflösegrades.

Im erfindungsgemässen Verfahren zur Behandlung eines Faserstroms aus einem Fasermaterial, insbesondere in der Spinnereivorbereitung, wird das Fasermaterial einem Behandlungsschritt und einem Überwachungsschritt unterworfen. Der Überwachungsschritt beinhaltet eine Überwachung des Faserstroms nach dem oben beschriebenen erfindungsgemässen Verfahren zur Überwachung eines Faserstroms. Der im Überwachungsschritt bestimmte Auflösegrad beeinflusst den Behandlungsschritt.

In einer Ausführungsform erfolgt der Behandlungsschritt stromaufwärts des Überwachungsschritts. Ein Regelkreis wird bereitgestellt, in welchem der Auflösegrad eine Regelgrösse darstellt und mindestens eine vom Auflösegrad abhängige Stellgrösse den Behandlungsschritt beeinflusst.

Der Behandlungsschritt beinhaltet bspw. ein Öffnen des Fasermaterials.

Die Stellgrösse kann eine erste Drehgeschwindigkeit einer Öffnungswalze zum Öffnen des Fasermaterials und/oder eine zweite Drehgeschwindigkeit einer Speisewalze zum Einspeisen des Fasermaterials beeinflussen.

In einer anderen Ausführungsform erfolgt der Behandlungsschritt stromabwärts des Überwachungsschritts. Der Auflösegrad steuert den Behandlungsschritt.

Die erfindungsgemässe Überwachungseinheit zur Überwachung eines Faserstroms aus einem Fasermaterial, insbesondere in der Spinnereivorbereitung, ist zur Bestimmung eines Auflösegrades des Fasermaterials eingerichtet, der angibt, wie gut das Fasermaterial in einzelne Faserflocken aufgelöst ist. Die Überwachungseinheit beinhaltet mindestens eine Kamera zur Aufnahme mindestens eines Bildes des Fasermaterials. Die Überwachungseinheit beinhaltet Auswertemittel, die dazu eingerichtet sind, aus dem mindestens einen Bild diejenige Bildfläche, auf die Fasermaterial abgebildet ist, durch Bildverarbeitung zu bestimmen, einen Wert eines Massenfluss des Faserstroms pro Zeiteinheit zu empfangen und den Auflösegrad des Fasermaterials, der angibt, wie gut das Fasermaterial in einzelne Faserflocken aufgelöst ist, als skalare Grösse durch Bildung eines Quotienten aus der Bildfläche, auf die Fasermaterial abgebildet ist, einerseits und aus dem Wert des Massenflusses andererseits zu berechnen.

In einer Ausführungsform beinhaltet die Überwachungseinheit einen Präsentationsschacht, durch welchen der Faserstrom führbar ist. Mehrere Kameras können derart angeordnet sein, dass jede der Kameras ein Bild jeweils eines anderen Teils einer sich quer zur Förderrichtung erstreckenden Breite des Präsentationsschachtes aufnimmt.

In einer Ausführungsform ist die Überwachungseinheit zur Bestimmung des Auflösegrades gemäss der Formel

$$X = A_F \big/ \big( A_T \cdot m \big)$$

eingerichtet, worin $A_F$ diejenige Bildfläche, auf die Fasermaterial abgebildet wird, $A_T$ eine Gesamtfläche des Bildes und m einen Massenfluss des Faserstroms pro Zeiteinheit bedeuten.

Die erfindungsgemässe Vorrichtung zur Behandlung eines Faserstroms aus einem Fasermaterial, insbesondere in der Spinnereivorbereitung, beinhaltet eine Behandlungseinheit zur Behandlung des Faserstroms und eine oben beschriebene erfindungsgemässe Überwachungseinheit zur Überwachung des Faserstroms. Die Überwachungseinheit ist zur Übermittlung des von ihr bestimmten Auflösegrades an die Behandlungseinheit mit der Behandlungseinheit verbunden.

In einer Ausführungsform ist die Behandlungseinheit stromaufwärts der Überwachungseinheit gelegen. Die Vorrichtung beinhaltet einen Regelkreis mit einem Regler. In dem Regelkreis ist der von der Überwachungseinheit bestimmte Auflösegrad als Regelgrösse dem Regler zuführbar, und der Regler ist zur Abgabe mindestens einer vom Auflösegrad abhängigen Stellgrösse an die Behandlungseinheit eingerichtet.

Die Behandlungseinheit ist z. B. eine Öffnungseinheit zum Öffnen des Fasermaterials.

Die Öffnungseinheit kann eine Speisewalze zum Einspeisen des Fasermaterials beinhalten, die von einem ersten Motor zur Drehung antreibbar ist, und die Stellgrösse kann dem ersten Motor zuführbar sein. Die Öffnungseinheit kann eine Öffnungswalze zum Öffnen des Fasermaterials beinhalten, die von einem zweiten Motor zur Drehung antreibbar ist und deren Mantelfläche mit Vorsprüngen versehen ist, und die Stellgrösse kann dem zweiten Motor zuführbar sein.

In einer anderen Ausführungsform ist die Behandlungseinheit stromabwärts der Überwachungseinheit gelegen. Die Überwachungseinheit ist zur Abgabe des Auflösegrades als Steuersignal an die Behandlungseinheit eingerichtet.

Die Erfindung bietet quantitative Information über die Auflösung des Faserstroms. Diese Information kann unter anderem dazu genutzt werden, den Faserstrom optimal aufzulösen. Optimal heisst, dass bei gleich bleibender Produktionsmenge ein guter Kompromiss zwischen der Auflösung des Fasermaterials einerseits und einer Beschädigung des Fasermaterials andererseits eingestellt und eingehalten werden kann. Eine gute Auflösung ist wichtig für nachfolgende Prozessstufen und für die Entfernung von Fremdmaterial aus dem Faserstrom.

AUFZÄHLUNG DER ZEICHNUNGEN

Nachfolgend werden Ausführungsformen der Erfindung anhand der schematischen Zeichnungen detailliert erläutert.

Figur 1     zeigt eine erfindungsgemässe Vorrichtung.
Figur 2     zeigt eine Überwachungseinheit einer erfindungsgemässen Vorrichtung in einer Draufsicht.
Figur 3     zeigt ein Bild von Fasermaterial.
Figur 4     zeigt einen Ausschnitt aus einem textilen Herstellungsprozess mit zwei Ausführungsformen des erfindungsgemässen Verfahrens.

AUSFÜHRUNG DER ERFINDUNG

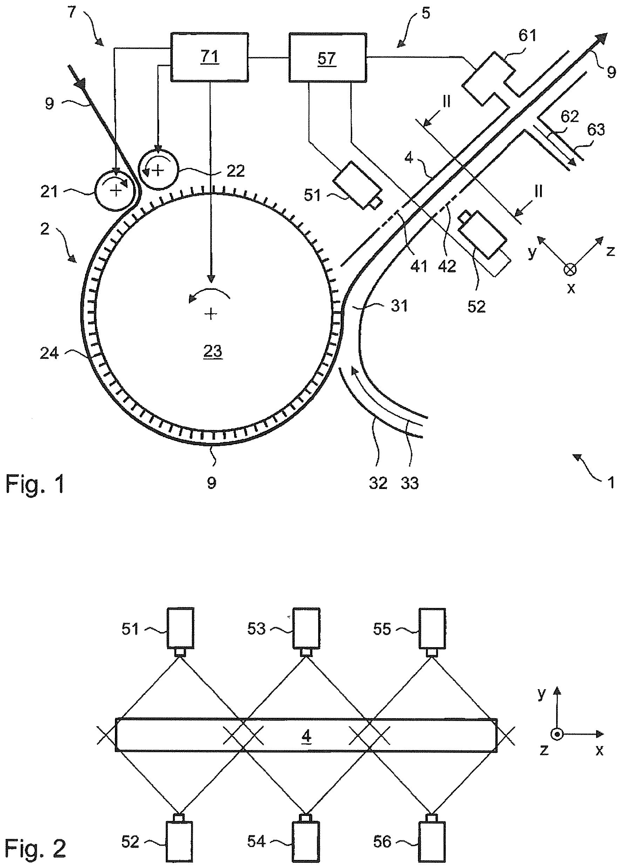

**Figur 1** zeigt schematisch eine Ausführungsform einer erfindungsgemässen Vorrichtung 1 zur Behandlung eines Faserstroms 9 aus einem Fasermaterial. Die Vorrichtung 1 beinhaltet eine Öffnungseinheit 2 zum Öffnen des Faserstroms 9. Der Faserstrom 9 kann bspw. über ein von einem (nicht eingezeichneten) ersten Motor in entgegengesetzte Drehrichtungen angetriebenes, zusammenwirkendes Speisewalzenpaar 21, 22 zugeführt werden.

Die Öffnungseinheit 2 weist eine Öffnungswalze 23 auf. Die Öffnungswalze 23 wird von einem (nicht eingezeichneten) zweiten Motor zur Drehung angetrieben. Ihre Mantelfläche ist mit einer Garnitur versehen und weist Vorsprünge 24 auf, die z. B. als herausstehende Nadeln oder als Sägezahnreihen ausgebildet sein können.

Beim Abziehen des Fasermaterials im Bereich des Speisewalzenpaars 21, 22 durch die Öffnungswalze 23 wird das Fasermaterial geöffnet. Im Faserstrom 9 mitgeführte Verunreinigungen können durch die Fliehkraft, die sie auf der Mantelfläche der rotierenden Öffnungswalze 23 erfahren, nach aussen austreten. Die Reinigung des Fasermaterials kann durch (nicht eingezeichnete) Reinigungselemente, die entlang einem Teilbereich des Umfangs der Öffnungswalze 23 angeordnet sind, unterstützt werden.

Das gereinigte Fasermaterial wird einer Abgabeöffnung 31 zugeführt. Im Bereich der Abgabeöffnung 31 ist ein Kanal 32 angeordnet, über welchen Luft 33 zur Öffnungswalze 23 zugeführt wird. Die tangential zur Mantelfläche der Öffnungswalze 23 strömende Luft 33 unterstützt den Ablösevorgang des in der Garnitur der Öffnungswalze 23 befindlichen Fasermaterials. Das Fasermaterial löst sich so von der Öffnungswalze 23 und wird in einen Abführkanal 4 übergeführt. Die Förderrichtung des Faserstroms 9 im Abführkanal 4 ist mit dem Symbol z gekennzeichnet. Durch den Abführkanal 4 kann der Faserstrom 9 einer weiteren Reinigungsstufe oder einem nachfolgenden Speiseschacht einer Karde zugeführt werden; diese weiteren möglichen Prozessstufen sind in Figur 1 nicht eingezeichnet.

Im Bereich des Abführkanals 4 ist eine Überwachungseinheit 5 zur Überwachung des von der Öffnungseinheit 2 geöffneten Fasermaterials angebracht. Die Überwachungseinheit 5 beinhaltet z. B. mindestens eine Kamera 51, 52, die durch jeweils ein transparentes Fenster 41, 42 in einer Wand des Abführkanals 4 Bilder des Fasermaterials aufnimmt. Der Bereich des Abführkanals 4, in dem sich die Fenster 41, 42 befinden, dient also als Präsentationsschacht für das Fasermaterial und ist entsprechend ausgebildet. Er hat vorzugsweise einen rechteckigen Querschnitt, wobei eine Höhe des Rechtecks (in y-Richtung gemessen) viel kleiner ist als eine Breite des Rechtecks (in x-Richtung gemessen), wie dies auch in Figur 2 dargestellt ist. Im Ausführungsbeispiel von Figur 1 nehmen mindestens zwei Kameras 51, 52 Bilder im Wesentlichen aus entgegengesetzten Richtungen (+y, -y) auf. Die Kameras 51, 52 können z. B. ein- oder zweidimensionale CCD-Sensorarrays ausweisen. Weitere Einzelheiten zur Anordnung der Kameras werden anhand der Figur 2 diskutiert.

Die Kameras 51, 52 sind mit einer Auswerteeinheit 57 der Überwachungseinheit 5 verbunden. Die Auswerteeinheit 57 wertet einerseits die von den Kameras 51, 52 aufgenommenen Bilder auf möglicherweise im Faserstrom 9 vorhandenes Fremdmaterial aus. Sie steuert Ausscheidemittel 61 zum Ausscheiden des Fremdmaterials aus dem Faserstrom 9. Die Ausscheidemittel 61 können z. B. als mindestens eine Ausblasdüse ausgebildet sein, der von einer (nicht eingezeichneten) Druckluftquelle über ein von der Auswerteeinheit 57 betätigbares (nicht eingezeichnetes) Ventil Druckluft zugeführt wird. Die von der Ausblasdüse 61 ausgeblasene Druckluft 63 breitet sich im Wesentlichen quer zur Förderrichtung des Faserstroms 9 aus und scheidet Fremdmaterial in einen Fremdmaterialkanal 62 ab.

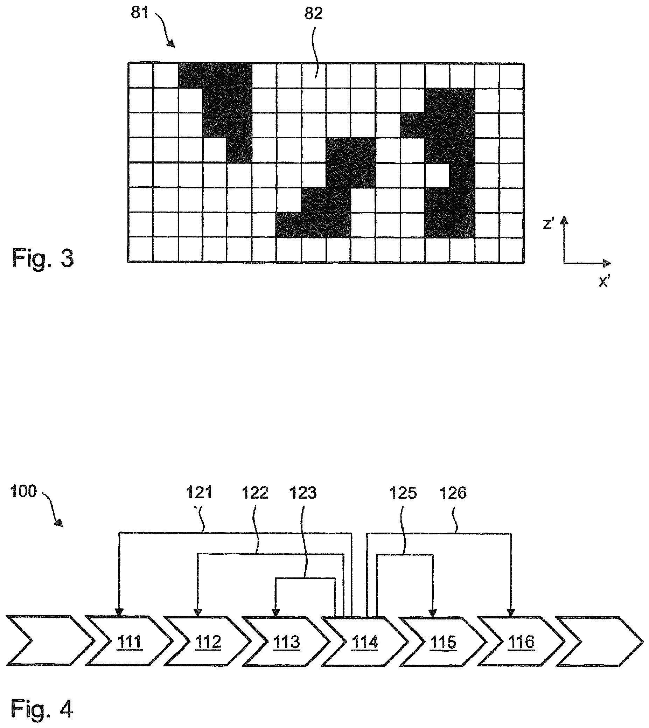

Andererseits bestimmt die Auswerteeinheit 57 aus den von den Kameras 51, 52 aufgenommenen Bildern einen Auflösegrad des Fasermaterials. Auf den Auflösegrad wird anlässlich von Figur 3 näher eingegangen.

Ausserdem enthält die Vorrichtung 1 einen Regelkreis 7 mit einem Regler 71. Der von der Überwachungseinheit 5 bestimmte Auflösegrad wird als Regelgrösse dem Regler 71 zugeführt. Zu diesem Zweck ist der Regler z. B. mit der Auswerteeinheit 57 der Überwachungseinheit 5 verbunden. Der Regler 71 gibt eine vom Auflösegrad abhängige Stellgrösse an die Öffnungseinheit 2 ab, welche die Regelstrecke in dem Regelkreis 7 bildet. Die Stellgrösse kann z. B. an den ersten Motor abgegeben werden, um die Drehgeschwindigkeiten der Speisewalzen 21, 22 zu beeinflussen, und/oder an den zweiten Motor, um die Drehgeschwindigkeit der Öffnungswalze 23 zu beeinflussen.

**Figur 2** zeigt einen Querschnitt durch den als Präsentationsschacht ausgebildeten Abführkanal 4 entlang der Linie II-II von Figur 1. Der Abführkanal 4 weist vorzugsweise einen rechteckförmigen Querschnitt auf. Entlang den beiden langen, in x-Richtung verlaufenden Rechteckseiten sind mehrere, z. B. je drei, Kameras 51-56 angeordnet. Drei entlang ein und derselben Rechteckseite angeordnete Kameras 51, 53, 55 decken zusammen die ganze Breite des Abführkanals 4 aus einer Richtung (+y) ab, die drei anderen Kameras 52, 54, 56 aus der gegenüberliegenden Richtung (-y). So kann die Auswerteeinheit 57 aus den Bildern aller sechs Kameras 51-56 das Fremdmaterial und den Auflösegrad zuverlässig auswerten. Durch eine Überlappung der Gesichtsfelder der Kameras 51-56 und durch die Aufnahmen aus zwei entgegengesetzten Richtungen ergeben sich vorzugsweise Redundanzen, die in der Auswerteeinheit 57 berücksichtigt werden können. Die Höhe des Abführkanals 4 (in y-Richtung gemessen) ist viel kleiner als seine Breite (in x-Richtung gemessen), damit möglichst alles Fasermaterial von den Kameras 51-56 erfasst wird.

Anhand der **Figur 3** wird beispielhaft die Bestimmung des Auflösegrades illustriert. Der Auflösegrad ist eine Grösse, vorzugsweise ein Skalar, die angibt, wie gut das Fasermaterial in einzelne Faserflocken oder sogar einzelne Fasern aufgelöst ist. Üblicherweise wird eine hohe Auflösung angestrebt, wobei aber eine hohe Auflösung meistens eine hohe Beschädigung der Fasern mit sich bringt. Der Zielkonflikt zwischen Auflösung und Beschädigung muss meist durch einen Kompromiss ausgeglichen werden. Der Fachmann ist bei Kenntnis der Erfindung in der Lage, den Regelkreis 7 (siehe Figur 1) entsprechend auszubilden.

Im Ausführungsbeispiel gemäss der Figur 3 wird der Auflösegrad einerseits aus einer Projektion einer Gesamtoberfläche des Fasermaterials im Wesentlichen quer zur Förderrichtung z des Fasermaterials, d. h. in Richtung y, aufgrund eines zweidimensionalen Bildes 81 bestimmt. Das Bild 81 wurde mit mindestens einer Kamera 51-56 aufgenommen. In dem Bild 81 sind schematisch Bildelemente oder Pixel 82 eingezeichnet, die in Form einer Matrix angeordnet sind und durch einen digitalen Sensorarray der Kamera 51-56 entstehen. Auf die Länge (x'-Richtung) des Bildes 81 von bspw. 16 Pixeln wird die Breite (x-Richtung) des Abführkanals 4 abgebildet. Die Höhe (z'-Richtung) des Bildes 81 von bspw. 8 Pixeln entspricht der Förderrichtung z des Faserstroms 9 im Abführkanal 4. In der Praxis werden vorzugsweise Bilder 81 mit mehr Pixeln erzeugt als in Figur 3 dargestellt. Diejenigen Pixel 82, die in Figur 3 schwarz eingezeichnet sind, stellen schematisch Pixel dar, auf welche Fasermaterial abgebildet wird, während die weiss eingezeichneten Pixel 82 einen Hintergrund oder eine Rückwand des Abführkanals 4 sehen. Selbstverständlich könnte umgekehrt das Fasermaterial hell und der Hintergrund dunkel sein.

In x'-Richtung kann das Bild 81 kann von einer einzelnen Kamera 51 erzeugt oder aus Bildern von mehreren Kameras 51, 53, 55 zusammengesetzt werden. In z'-Richtung kann das Bild 81 von einer einzelnen Kamera mit einem zweidimensionalen Sensorarray erzeugt oder aus mehreren zeitlich nacheinander aufgenommenen Bildern einer Kamera mit einem eindimensionalen Sensorarray zusammengesetzt werden.

Andererseits wird in diesem Ausführungsbeispiel für die Bestimmung des Auflösegrades ein Massenfluss des Faserstroms 9 (siehe Figur 1) pro Zeiteinheit verwendet. Der Massenfluss pro Zeiteinheit kann z. B. an einer (nicht dargestellten) Karde, die stromabwärts von der Öffnungseinheit 2 angeordnet ist, bestimmt werden. Der Massenfluss pro Zeiteinheit wird durch geeignete (nicht dargestellte) Übertragungsmittel an die Auswerteeinheit 57 übertragen, ebenso wie die von den Kameras 51-56 aufgenommenen Bilder. Die Auswerteeinheit 57 berechnet daraus den Auflösegrad.

Für die Angabe eines Beispiels zur Bestimmung des Auflösegrades werden die folgenden Bezeichnungen eingeführt:

| Symbol | Bedeutung | Zahlenwert im Beispiel von Fig. 3 |
|---|---|---|
| $A_F$ | Bildfläche, auf die Fasermaterial abgebildet wird | 29 |

(fortgesetzt)

| Symbol | Bedeutung | Zahlenwert im Beispiel von Fig. 3 |
|---|---|---|
| $A_T$ | Gesamtfläche des Bildes 81 | 128 |
| m | Massenfluss des Faserstroms 9 pro Zeiteinheit | |

Dabei können die Flächen $A_F$ und $A_T$ in Pixeln oder in einer (und derselben) physikalischen Flächeneinheit wie Quadratmillimeter angegeben werden. Der Massenfluss m kann für eine Zeiteinheit wie z. B. eine Minute oder eine Stunde bestimmt werden. Er kann z. B. in einer stromabwärts der Vorrichtung 1 gelegenen (nicht eingezeichneten) Karde gemessen und an die Auswerteeinheit 57 übermittelt werden.

Vorzugsweise wird der Auflösegrad als skalare Grösse durch Bildung eines Quotienten aus der Bildfläche $A_F$ einerseits und aus dem Massenfluss m andererseits berechnet. Eine beispielhafte Definition des Auflösegrades X lautet:

$$X = A_F / (A_T \cdot m) \quad .$$

Kleinere Werte von X bedeuten in diesem Beispiel eine niedrigere, schlechtere Auflösung des Fasermaterials, grössere Werte eine höhere, bessere Auflösung.

Ausser der genannten Quotientenbildung können bei der Berechnung des Auflösegrades weitere Rechenoperationen durchgeführt werden, in welche die Bildfläche $A_F$, die Gesamtfläche $A_T$, der Massenfluss m und/oder weitere Grössen eingehen. Der Massenfluss m kann als Masse pro Zeiteinheit oder als Masse pro Zeiteinheit pro Querschnittfläche des Abführkanals 4 angegeben werden.

Die obige Diskussion der Figur 3 behandelt nur den statischen Fall eines einzelnen Bildes 81. In der Praxis wird das geöffnete Fasermaterial ständig oder zumindest während eines gewissen Zeitraums überwacht. Dabei wird eine Vielzahl von Bildern 81 zeitlich nacheinander aufgenommen und der Auswerteeinheit 57 zugeführt, wodurch auch die zeitliche Dimension eine Bedeutung erhält. Die Auswerteeinheit 57 bestimmt aus den Bildern 81 einen Auflösegrad X. In der Ausführungsform gemäss Figur 1 wird der Auflösegrad X von der Auswerteeinheit 57 an den Regler 71 übermittelt. Für eine robuste Regelung sollte sich der Auflösegrad X zeitlich nicht zu schnell ändern. Vorzugsweise kommt also während oder nach der Bestimmung des Auflösegrades X eine Tiefpassfilterung des Auflösegrades X zum Einsatz. Nachfolgend werden beispielhaft einige Möglichkeiten zur Tiefpassfilterung beschrieben.

Für die Tiefpassfilterung kann nach einer der folgenden Möglichkeiten oder nach einer Kombination derselben vorgegangen werden:

- Jeder aus einem Bild 81 bestimmte Parameter, z. B. die oben definierten Parameter $A_F$ und $A_T$, wird über ein bestimmtes Zeitintervall oder über eine bestimmte Anzahl aufeinander folgender Bilder 81 laufend gemittelt. Der Auflösegrad X wird aus den laufenden Mittelwerten der Parameter bestimmt und dem Regler 71 zugeführt.
- Für jedes Bild 81 wird der momentane Auflösegrad X(t) bestimmt. Die momentanen Auflösegrade X(t) werden über ein bestimmtes Zeitintervall oder über eine bestimmte Anzahl aufeinander folgender Bilder 81 laufend gemittelt. Das laufende Mittel wird dem Regler 71 zugeführt.
- Mehrere zeitlich nacheinander aufgenommene Bilder 81 gemäss Figur 3 werden zu einem grösseren Bild zusammengesetzt, so dass jeweils ein Bild an das nächste angrenzt. Der Auflösegrad X wird aus dem grösseren Bild 81 bestimmt.

**Figur 4** zeigt einen Ausschnitt aus einem textilen Herstellungsprozess 100, vorzugsweise der Spinnereivorbereitung, worin schematisch das erfindungsgemässe Verfahren eingezeichnet ist. Der textile Herstellungsprozess 100 beinhaltet z. B. die folgenden Prozessschritte: Grobreinigung 111, Mischen 112, Feinreinigung 113, erfindungsgemässe Überwachung 114 des Faserstroms, Reinigung 115 des Faserstroms durch die Ausscheidemittel 61 und Kardieren 116. Der im erfindungsgemässen Überwachungsschritt 114 bestimmte Auflösegrad X des Fasermaterials kann die Behandlungsschritte 111-113, 115, 116 auf zwei Arten beeinflussen, die nachfolgend beschrieben werden.

In einer ersten Ausführungsform liegen die beeinflussten Behandlungsschritte 111-113 stromaufwärts des Überwachungsschritts 114. Es wird ein Regelkreis 7, wie er anlässlich der Figur 1 beschrieben wurde, bereitgestellt. Der im Überwachungsschritt 114 bestimmte Auflösegrad X stellt im Regelkreis 7 eine Regelgrösse dar. Mindestens eine vom Auflösegrad X abhängige Stellgrösse beeinflusst einen oder mehrere Behandlungsschritte 111-113. Diese Beeinflussung oder Rückkopplung ist in Figur 4 mit Pfeilen 121-123 dargestellt. Es können z. B. die folgenden Grössen beeinflusst werden:

- in der Grobreinigung 111 eine Drehzahl einer Reinigungswalze des Grobreinigers,
- beim Mischen 112 eine Drehzahl einer Abschlagwalze der Mischvorrichtung, und/oder
- in der Feinreinigung 113 eine Drehzahl einer Reinigungswalze, eine Klemmdistanz, ein Verzug und/oder ein Ausscheidewinkel eines Reinigungsmessers des Feinreinigers.

In einer zweiten Ausführungsform liegen die beeinflussten Behandlungsschritte 115, 116 stromabwärts des Überwachungsschritts 114. Hier wird der im Überwachungsschritt 114 bestimmte Auflösegrad X für eine Steuerung stromabwärts gelegener Elemente in den Behandlungsschritten 115, 116 verwendet. Diese Beeinflussung oder Steuerung ist in Figur 4 mit Pfeilen 125, 126 dargestellt. Es können z. B. die folgenden Grössen beeinflusst werden:

- in der Reinigung 115 eine Position der betätigten Ausscheidemittel 61, eine Dauer und/oder eine Intensität ihrer Betätigung und/oder
- beim Kardieren 116 eine Drehzahl eines Tambours, eine Klemmdistanz, ein Verzug der Karde und/oder eine Auswurfdistanz am Messer des Vorreissers.

Selbstverständlich ist die vorliegende Erfindung nicht auf die oben diskutierten Ausführungsformen beschränkt. Bei Kenntnis der Erfindung wird der Fachmann weitere Varianten, im Rahmen der Ansprüche, herleiten können, die auch zum Gegenstand der vorliegenden Erfindung gehören.

BEZUGSZEICHENLISTE

1     Vorrichtung

2        Öffnungseinheit
21, 22   Speisewalzen
23       Öffnungswalze
24       Vorsprünge auf Mantelfläche der Öffnungswalze

31     Abgabeöffnung
32     Kanal
33     Luftströmung

4        Abführkanal
41, 42    transparente Fenster in einer Wand des Abführkanals

5        Überwachungseinheit
51-56    Kameras
57       Auswerteeinheit

61     Ausblasdüse
62     Fremdmaterialkanal
63     Druckluft

7     Regelkreis
71     Regler

81     Bild
82     Pixel

9     Faserstrom

100     textiler Herstellungsprozess

111     Grobreinigung
112     Mischen
113     Feinreinigung

114    Überwachung des Faserstroms
115    Reinigung
116    Kardieren

121-123    Regelungen
125, 126    Steuerungen

**Patentansprüche**

1. Verfahren zur Überwachung eines Faserstroms (9) aus einem Fasermaterial, insbesondere in der Spinnereivorbereitung, wobei

   ein Auflösegrad des Fasermaterials, der angibt, wie gut das Fasermaterial in einzelne Faserflocken aufgelöst ist, bestimmt wird,
   **dadurch gekennzeichnet, dass**
   mindestens ein Bild (81) des Fasermaterials aufgenommen und aus dem mindestens einen Bild (81) diejenige Bildfläche, auf die Fasermaterial abgebildet ist, durch Bildverarbeitung bestimmt wird,
   ein Massenfluss des Faserstroms (9) pro Zeiteinheit bestimmt wird und
   der Auflösegrad als skalare Grösse durch Bildung eines Quotienten aus der Bildfläche, auf die Fasermaterial abgebildet ist, einerseits und aus dem Massenfluss andererseits berechnet wird.

2. Verfahren nach Anspruch 1, wobei die Aufnahme des mindestens einen Bildes (81) und die Bestimmung des Massenflusses pro Zeiteinheit an unterschiedlichen Stellen des Faserstroms (9) erfolgen.

3. Verfahren nach Anspruch 2, wobei der Auflösegrad gemäss der Formel

$$X = A_F / (A_T \cdot m)$$

   bestimmt wird, worin $A_F$ diejenige Bildfläche, auf die Fasermaterial abgebildet wird, $A_T$ eine Gesamtfläche des Bildes (81) und m einen Massenfluss des Faserstroms (9) pro Zeiteinheit bedeuten.

4. Verfahren zur Behandlung eines Faserstroms (9) aus einem Fasermaterial, insbesondere in der Spinnereivorbereitung, wobei das Fasermaterial einem Behandlungsschritt (111-113, 115, 116) und einem Überwachungsschritt (114) unterworfen wird,

   **dadurch gekennzeichnet, dass**
   der Überwachungsschritt (114) eine Überwachung des Faserstroms (9) nach einem der vorangehenden Ansprüche beinhaltet und der im Überwachungsschritt (114) bestimmte Auflösegrad den Behandlungsschritt (111-113, 115, 116) beeinflusst.

5. Verfahren nach Anspruch 4, wobei der Behandlungsschritt (111-113) stromaufwärts des Überwachungsschritts (114) erfolgt und ein Regelkreis (7) bereitgestellt wird, in welchem der Auflösegrad eine Regelgrösse darstellt und mindestens eine vom Auflösegrad abhängige Stellgrösse den Behandlungsschritt (111-113) beeinflusst (121-123).

6. Verfahren nach Anspruch 5, wobei der Behandlungsschritt (111, 113) ein Öffnen des Fasermaterials beinhaltet.

7. Verfahren nach Anspruch 6, wobei die Stellgrösse eine erste Drehgeschwindigkeit einer Öffnungswalze (2) zum Öffnen des Fasermaterials und/oder eine zweite Drehgeschwindigkeit einer Speisewalze (21, 22) zum Einspeisen des Fasermaterials beeinflusst.

8. Verfahren nach Anspruch 4, wobei der Behandlungsschritt (115, 116) stromabwärts des Überwachungsschritts (114) erfolgt und der Auflösegrad den Behandlungsschritt (115, 116) steuert (125, 126).

9. Überwachungseinheit (5) zur Überwachung eines Faserstroms (9) aus einem Fasermaterial, insbesondere in der Spinnereivorbereitung,

welche Überwachungseinheit (5) mindestens eine Kamera (51-56) zur Aufnahme mindestens eines Bildes (81) des Fasermaterials beinhaltet,

**dadurch gekennzeichnet, dass**

die Überwachungseinheit (5) Auswertemittel (57) beinhaltet, die dazu eingerichtet sind,

aus dem mindestens einen Bild (81) diejenige Bildfläche, auf die Fasermaterial abgebildet ist, durch Bildverarbeitung zu bestimmen,

einen Wert eines Massenfluss des Faserstroms (9) pro Zeiteinheit zu empfangen und

einen Auflösegrad des Fasermaterials, der angibt, wie gut das Fasermaterial in einzelne Faserflocken aufgelöst ist, als skalare Grösse durch Bildung eines Quotienten aus der Bildfläche, auf die Fasermaterial abgebildet ist, einerseits und aus dem Wert des Massenflusses andererseits zu berechnen.

10. Überwachungseinheit (5) nach Anspruch 9, wobei die Überwachungseinheit (5) zur Bestimmung des Auflösegrades gemäss der Formel

$$X = A_F / (A_T \cdot m)$$

eingerichtet ist, worin $A_F$ diejenige Bildfläche, auf die Fasermaterial abgebildet wird, $A_T$ eine Gesamtfläche des Bildes (81) und m einen Massenfluss des Faserstroms (9) pro Zeiteinheit bedeuten.

11. Vorrichtung (1) zur Behandlung eines Faserstroms (9) aus einem Fasermaterial, insbesondere in der Spinnereivorbereitung, mit

einer Behandlungseinheit (2) zur Behandlung des Faserstroms (9) und
einer Überwachungseinheit (5) zur Überwachung des Faserstroms (9),

**dadurch gekennzeichnet, dass**

die Überwachungseinheit eine Überwachungseinheit (5) nach Anspruch 9 oder 10 ist und
die Überwachungseinheit (5) zur Übermittlung des von ihr bestimmten Auflösegrades an die Behandlungseinheit (2) mit der Behandlungseinheit (2) verbunden ist.

12. Vorrichtung (1) nach Anspruch 11, wobei die Behandlungseinheit (2) stromaufwärts der Überwachungseinheit (5) gelegen ist und die Vorrichtung (1) einen Regelkreis (7) mit einem Regler (71) beinhaltet, in welchem Regelkreis (7)

der von der Überwachungseinheit (5) bestimmte Auflösegrad als Regelgrösse dem Regler (71) zuführbar ist und
der Regler (71) zur Abgabe mindestens einer vom Auflösegrad abhängigen Stellgrösse an die Behandlungseinheit (2) eingerichtet ist.

13. Vorrichtung (1) nach Anspruch 12, wobei die Behandlungseinheit (2) eine Öffnungseinheit (2) zum Öffnen des Fasermaterials ist.

14. Vorrichtung (1) nach Anspruch 13, wobei die Öffnungseinheit (2) eine Speisewalze (21, 22) zum Einspeisen des Fasermaterials beinhaltet, die von einem ersten Motor zur Drehung antreibbar ist, und die Stellgrösse dem ersten Motor zuführbar ist, und/oder wobei die Öffnungseinheit (2) eine Öffnungswalze (23) zum Öffnen des Fasermaterials beinhaltet, die von einem zweiten Motor zur Drehung antreibbar ist und deren Mantelfläche mit Vorsprüngen (24) versehen ist, und die Stellgrösse dem zweiten Motor zuführbar ist.

15. Vorrichtung (1) nach Anspruch 11, wobei die Behandlungseinheit (2) stromabwärts der Überwachungseinheit (5) gelegen ist und die Überwachungseinheit (5) zur Abgabe des Auflösegrades als Steuersignal an die Behandlungseinheit (2) eingerichtet ist.

**Claims**

1. Method for monitoring a fiber stream (9) of a fiber material, in particular in spinning preparation, wherein

a dissolution degree of the fiber material, which indicates how well the fiber material is dissolved into individual fiber flocks, is determined,

**characterized in that**
at least one image (81) of the fiber material is taken and from the at least one image (81) the image area on which fiber material is imaged is determined by image processing,
a mass flow of the fiber stream (9) per time unit is determined, and
the dissolution degree as a scalar quantity is calculated by forming a quotient of the image area on which fiber material is imaged, on the one hand, and of the mass flow on the other hand.

2. Method according to claim 1, wherein the taking of the at least one image (81) and the determination of the mass flow per time unit take place at different points of the fiber stream (9).

3. Method according to claim 2, wherein the dissolution degree is determined according to the formula

$$X = A_F / (A_T \cdot m) \ ,$$

wherein $A_F$ is the image area on which fiber material is imaged, $A_T$ is a total area of the image (81) and m is a mass flow of the fiber stream (9) per unit of time.

4. Method for the treatment of a fiber stream (9) of a fiber material, in particular in spinning preparation, wherein the fiber material is subjected to a treatment step (111-113, 115, 116) and a monitoring step (114),

**characterized in that**
the monitoring step (114) includes monitoring the fiber stream (9) according to one of the preceding claims and the dissolution degree determined in the monitoring step (114) influences the treatment step (111-113, 115, 116).

5. Method according to claim 4, wherein the treatment step (111-113) takes place upstream of the monitoring step (114) and a control loop (7) is provided in which the dissolution degree represents a control variable and at least one actuating variable dependent on the dissolution degree influences (121-123) the treatment step (111-113).

6. Method according to claim 5, wherein the treatment step (111, 113) includes opening the fiber material.

7. Method according to claim 6, wherein the actuating variable influences a first rotational speed of an opening roller (2) for opening the fiber material and/or a second rotational speed of a feed roller (21, 22) for feeding the fiber material.

8. Method according to claim 4, wherein the treatment step (115, 116) occurs downstream of the monitoring step (114) and the dissolution degree controls (125, 126) the treatment step (115, 116).

9. Monitoring unit (5) for monitoring a fiber stream (9) of a fiber material, in particular in spinning preparation,

which monitoring unit (5) includes at least one camera (51-56) for recording at least one image (81) of the fiber material,
**characterized in that**
the monitoring unit (5) includes evaluation means (57) which are configured

to determine by image processing from the at least one image (81) the image area on which fiber material is imaged,
to receive a value of a mass flow of the fiber stream (9) per time unit, and
to calculate a dissolution degree of the fiber material, which indicates how well the fiber material is dissolved into individual fiber flocks, as a scalar quantity by forming a quotient of the image area on which fiber material is imaged, on the one hand, and of the value of the mass flow on the other hand.

10. Monitoring unit (5) according to claim 9, wherein the monitoring unit (5) is configured for determining the dissolution degree according to the formula

$$X = A_F / (A_T \cdot m) \ ,$$

wherein $A_F$ is the image area on which fiber material is imaged, $A_T$ is a total area of the image (81) and m is a mass flow of the fiber stream (9) per time unit.

**11.** Device (1) for treating a fiber stream (9) of a fiber material, in particular in spinning preparation, with

      a treatment unit (2) for treating the fiber stream (9) and
      a monitoring unit (5) for monitoring the fiber stream (9),
      **characterized in that**
      the monitoring unit is a monitoring unit (5) according to claim 9 or 10 and
      the monitoring unit (5) is connected to the treatment unit (2) for the purpose of transmitting the dissolution degree
      determined by it to the treatment unit (2).

**12.** Device (1) according to claim 11, wherein the treatment unit (2) is disposed upstream of the monitoring unit (5) and the device (1) includes a control loop (7) with a controller (71), in which control loop (7)

      the dissolution degree determined by the monitoring unit (5) is feedable as a control variable to the controller (71), and
      the controller (71) is configured to deliver at least one actuating variable dependent on the dissolution degree to the treatment unit (2).

**13.** Device (1) according to claim 12, wherein the treatment unit (2) is an opening unit (2) for opening the fiber material.

**14.** Device (1) according to claim 13, wherein the opening unit (2) includes a feed roller (21, 22) for feeding the fiber material, which is drivable for rotation by a first motor, and the actuating variable can be fed to the first motor, and/or wherein the opening unit (2) includes an opening roller (23) for opening the fiber material, which is drivable for rotation by a second motor and whose curved surface area is provided with projections (24), and the actuating variable can be fed to the second motor.

**15.** Device (1) according to claim 11, wherein the treatment unit (2) is disposed downstream of the monitoring unit (5) and the monitoring unit (5) is arranged to deliver the dissolution degree as a control signal to the treatment unit (2).

**Revendications**

**1.** Procédé de surveillance d'un flux de fibres (9) d'une matière fibreuse, en particulier dans la préparation à la filature, dans lequel

      un degré de démêlage de la matière fibreuse, qui indique dans quelle mesure la matière fibreuse est démêlée en flocons de fibres individuels, est déterminé, **caractérisé en ce que**
      au moins une image (81) de la matière fibreuse est prise et, à partir de ladite au moins une image (81), la surface d'image sur laquelle de la matière fibreuse est représentée est déterminée par traitement d'image,
      un débit massique du flux de fibres (9) par unité de temps est déterminé et
      le degré de démêlage est calculé comme une grandeur scalaire en formant un quotient à partir de la surface d'image sur laquelle de la matière fibreuse est représentée d'une part et du débit massique d'autre part.

**2.** Procédé selon la revendication 1, dans lequel la prise de ladite au moins une image (81) et la détermination du débit massique par unité de temps ont lieu à différents endroits du flux de fibres (9).

**3.** Procédé selon la revendication 2, dans lequel le degré de démêlage est déterminé selon la formule

$$X = A_F / \left( A_T \cdot m \right),$$

dans laquelle $A_F$ est la surface d'image sur laquelle de la matière fibreuse est représentée, $A_T$ est une surface totale de l'image (81) et m est un débit massique du flux de fibres (9) par unité de temps.

**4.** Procédé de traitement d'un flux de fibres (9) d'une matière fibreuse, en particulier dans la préparation à la filature, dans lequel la matière fibreuse est soumise à une étape de traitement (111-113, 115, 116) et à une étape de surveillance (114), **caractérisé en ce que**

l'étape de surveillance (114) comprend une surveillance du flux de fibres (9) selon l'une des revendications précédentes et le degré de démêlage déterminé dans l'étape de surveillance (114) influence l'étape de traitement (111-113, 115, 116).

5. Procédé selon la revendication 4, dans lequel l'étape de traitement (111-113) a lieu en amont de l'étape de surveillance (114) et une boucle de régulation (7) est prévue, dans laquelle le degré de démêlage représente une grandeur réglée et au moins une grandeur réglante dépendante du degré de démêlage influence (121-123) l'étape de traitement (111-113).

6. Procédé selon la revendication 5, dans lequel l'étape de traitement (111, 113) comprend une ouverture de la matière fibreuse.

7. Procédé selon la revendication 6, dans lequel la grandeur réglante influence une première vitesse de rotation d'un rouleau d'ouverture (2) pour ouvrir la matière fibreuse et/ou une seconde vitesse de rotation d'un rouleau d'alimentation (21, 22) pour alimenter la matière fibreuse.

8. Procédé selon la revendication 4, dans lequel l'étape de traitement (115, 116) a lieu en aval de l'étape de surveillance (114) et le degré de démêlage commande (125, 126) l'étape de traitement (115, 116).

9. Unité de surveillance (5) pour surveiller un flux de fibres (9) d'une matière fibreuse, en particulier dans la préparation à la filature,

    laquelle unité de surveillance (5) comprend au moins une caméra (51-56) pour prendre au moins une image (81) de la matière fibreuse,
    **caractérisée en ce que**
    l'unité de surveillance (5) comprend des moyens d'évaluation (57) qui sont conçus pour

    déterminer, par traitement d'image, à partir de ladite au moins une image (81) la surface d'image sur laquelle de la matière fibreuse est représentée,
    recevoir une valeur d'un débit massique du flux de fibres (9) par unité de temps et
    calculer un degré de démêlage de la matière fibreuse, qui indique dans quelle mesure la matière fibreuse est démêlée en flocons de fibres individuels, comme une grandeur scalaire en formant un quotient à partir de la surface d'image sur laquelle de la matière fibreuse est représentée d'une part et de la valeur du débit massique d'autre part.

10. Unité de surveillance (5) selon la revendication 9, dans laquelle l'unité de surveillance (5) est conçue pour déterminer le degré de démêlage selon la formule

$$X = A_F / (A_T \cdot m),$$

dans laquelle $A_F$ est la surface d'image sur laquelle de la matière fibreuse est représentée, $A_T$ est une surface totale de l'image (81) et m est un débit massique du flux de fibres (9) par unité de temps.

11. Dispositif (1) de traitement d'un flux de fibres (9) d'une matière fibreuse, en particulier dans la préparation à la filature, comportant

    une unité de traitement (2) pour traiter le flux de fibres (9) et
    une unité de surveillance (5) pour surveiller le flux de fibres (9),
    **caractérisé en ce que**
    l'unité de surveillance est une unité de surveillance (5) selon la revendication 9 ou 10 et
    l'unité de surveillance (5) est reliée à l'unité de traitement (2) pour transmettre le degré de démêlage déterminé par elle à l'unité de traitement (2).

12. Dispositif (1) selon la revendication 11, dans lequel l'unité de traitement (2) est située en amont de l'unité de surveillance (5) et le dispositif (1) comprend une boucle de régulation (7) avec un régulateur (71), dans laquelle boucle de régulation (7)

le degré de démêlage déterminé par l'unité de surveillance (5) peut être amené au régulateur (71) en tant que grandeur réglée et

le régulateur (71) est conçu pour délivrer au moins une grandeur réglante dépendante du degré de démêlage à l'unité de traitement (2).

13. Dispositif (1) selon la revendication 12, dans lequel l'unité de traitement (2) est une unité d'ouverture (2) pour ouvrir la matière fibreuse.

14. Dispositif (1) selon la revendication 13, dans lequel l'unité d'ouverture (2) comprend un rouleau d'alimentation (21, 22) pour alimenter la matière fibreuse, qui peut être entraîné en rotation par un premier moteur, et la grandeur réglante peut être amenée au premier moteur, et/ou dans lequel l'unité d'ouverture (2) comprend un rouleau d'ouverture (23) pour ouvrir la matière fibreuse, qui peut être entraîné en rotation par un second moteur et dont la surface périphérique est pourvue de saillies (24), et la grandeur réglante peut être amenée au second moteur.

15. Dispositif (1) selon la revendication 11, dans lequel l'unité de traitement (2) est située en aval de l'unité de surveillance (5) et l'unité de surveillance (5) est conçue pour délivrer le degré de démêlage en tant que signal de commande à l'unité de traitement (2).

Fig. 1

Fig. 2

81

82

Fig. 3

z'

x'

100

121   122   123        125   126

111   112   113   114   115   116

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 02066717 A1
- WO 9119841 A1
- EP 1103640 A1
- JP 3790779 B